# EUROPEAN PATENT SPECIFICATION

(11) **EP 1 440 846 B1**
(45) Date of publication and mention of the grant of the patent: **09.11.2005**
(21) Application number: 03001503.6
(22) Date of filing: 23.01.2003
(51) Int. Cl.: B60R 9/06, B60R 9/10, B60D 1/06

(54) **Clamp device for fixing a rack assembly to a trailer coupling**
Spannvorrichtung für die Befestigung eines Lastträgers an eine Anhängerkupplung
Dispositif de serrage pour fixer un châssis de transport à un attelage de remorque

(43) Date of publication of application: 28.07.2004
(73) Proprietor: Wang, Chiu-Kuei, YuanLi Town, MiaoLih Hsien (TW)
(72) Inventor: Wang, Chiu-Kuei, YuanLi Town, MiaoLih Hsien (TW)
(74) Representative: Robba, Pierpaolo

(56) References cited:
- EP-A- 1 095 820
- DE-U- 9 303 510
- DE-U- 29 810 614

## Description

### FIELD OF THE INVENTION

The present invention relates to a clamp device for connecting a bicycle rack and a connection sphere on a rear end of a vehicle.

### BACKGROUND OF THE INVENTION

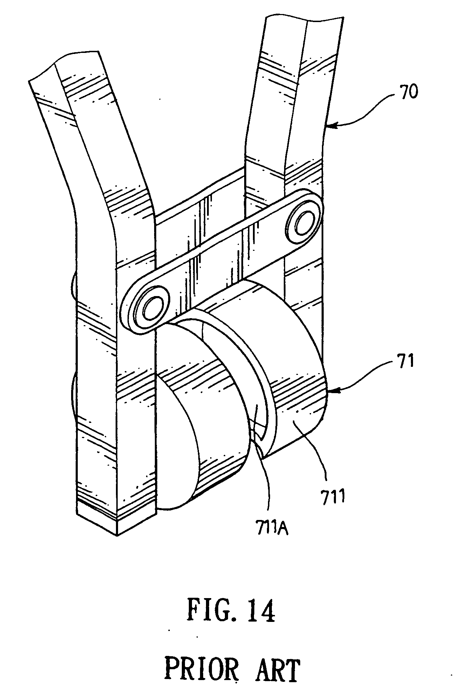

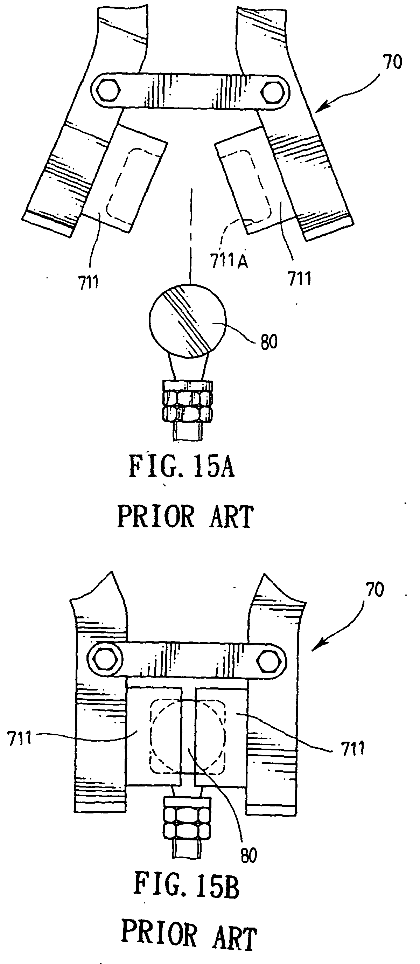

A conventional way for connecting the bicycle rack assembly and the connection sphere on a rear end of a vehicle is shown in Figs. 14, 15A and 15B, wherein the rack assembly 70 includes two parts and each has a clamping member 711 and the connection sphere 80 is clamped between the two clamping members 711. Each clamping member 711 includes a recess 711A in which the connection sphere 80 is received. The two clamping members 711 are pivotably connected to a transverse bar so that the two clamping members 711 can be opened wide to clamp the connection sphere 80. Nevertheless, the recesses 711 A are larger than the connection sphere 80 so that the whole bicycle rack assembly 70 shakes during transportation and the shaking results damages or cracks in the parts of the bicycle rack assembly 70. A clamp device according to the preamble of claim 1 is known from DE-U-9 303 510.

The present invention intends to provide a clamp device for a bicycle rack assembly which can clamp the connection sphere firmly.

### SUMMARY OF THE INVENTION

In accordance with one aspect of the present invention, there is provided a clamp device that includes a connection member to which a bicycle rack assembly is connected. The connection member has two side plates extending from a side thereof and a first fixing member is fixedly connected between the two side plates and a second fixing member is pivotably connected between the two side plates. Each of the first fixing member and the second fixing member has a semi-circular recess so as to receive the connection sphere connected to a rear end of the vehicle.

A pressing bar extends through the two side plates and has a plane surface defined in an outer periphery thereof. A pressing plate has an insertion on a top section thereof and the insertion is inserted between the pressing bar and the second fixing member. A lower section of the pressing plate extends from the insertion at an angle. A notch is defined in a lower edge of the lower section of the pressing plate and a periphery defining the first notch presses on a bar extending from the connection sphere. The plane surface of the pressing bar presses on an outside of the insertion of the pressing plate.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the clamp device of the present invention and the connection sphere and a part of the bicycle rack are connected to the clamp device;
Fig. 2 is an exploded view to show the clamp device of the present invention;
Fig. 3 is a cross sectional view to show the clamp device of the present invention;
Fig. 4A shows the second fixing member is pivoted and the connection sphere is to be inserted between the two fixing members;
Fig. 4B shows the connection sphere is clamped between the first fixing member and the second fixing member;
Fig. 5 shows the pressing plate presses on the second fixing member to ward the connection sphere;
Fig. 6A shows the plane surface of the pressing bar presses on the pressing plate;
Fig. 6B shows the pressing bar is rotated to release the pressing onto the pressing plate;
Fig. 7 shows the pressing bar is positioned by the engaging members and the pin;
Fig. 8 shows the bicycle rack and a support plate are connected to the base of the clamp device of the present invention;
Fig. 9 shows the assembly as shown in Fig. 8 is connected to a rear end of a vehicle;
Fig. 10 shows only the support plate is connected to the clamp device of the present invention;
Fig. 11 shows an auxiliary plate the connected to the pressing plate;
Figs. 12 and 13 show the bicycle rack assembly is directly connected to the connection member of the clamp device of the present invention;
Fig. 14 is a perspective view to show the conventional clamp device, and
Figs. 15A and 15B show the connection sphere is clamped by the conventional clamp device.

### DETAILED DESCRIPTION OF THE PREFERRED EMBODIMENT

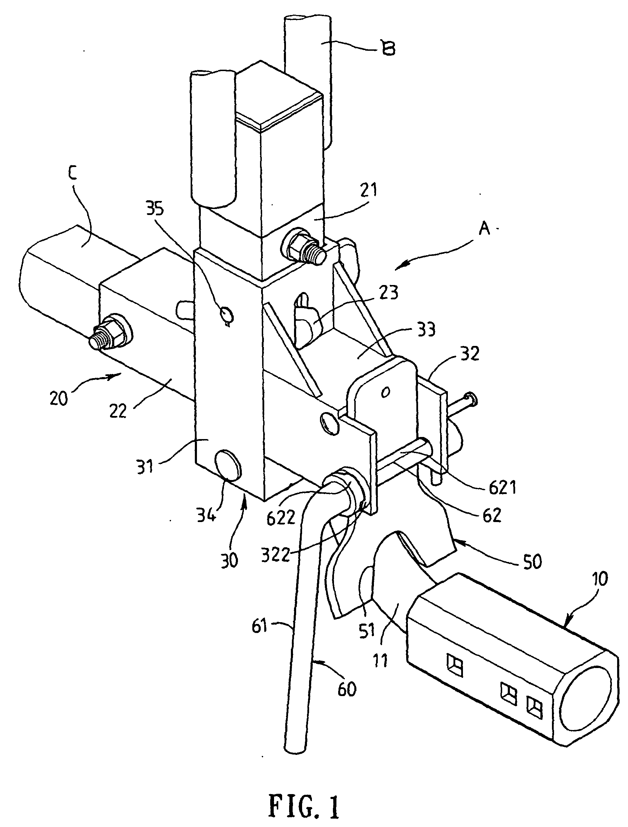

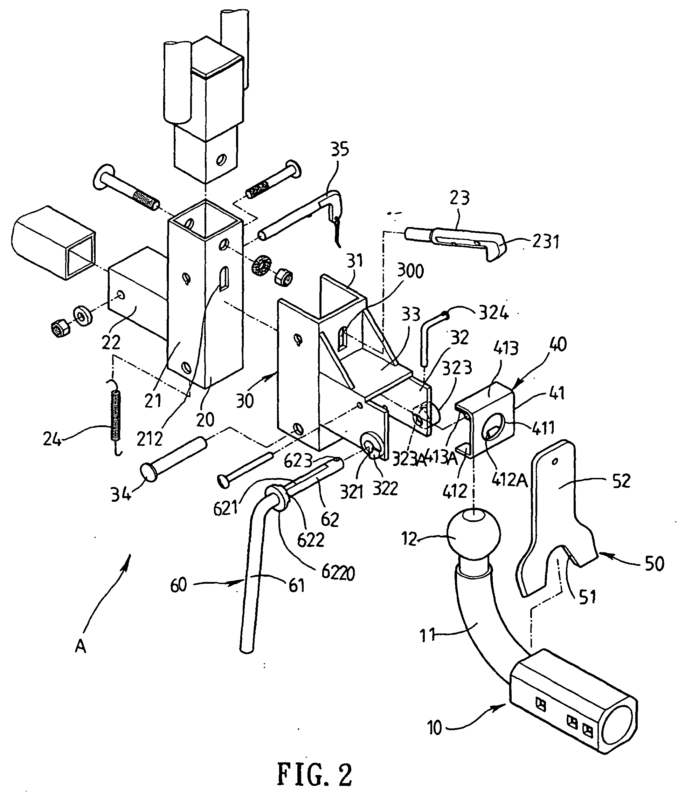

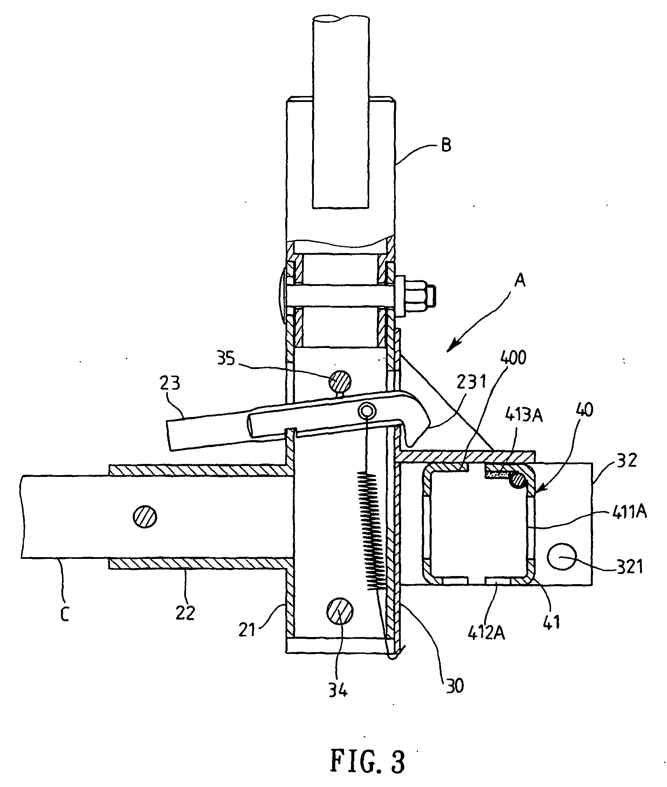

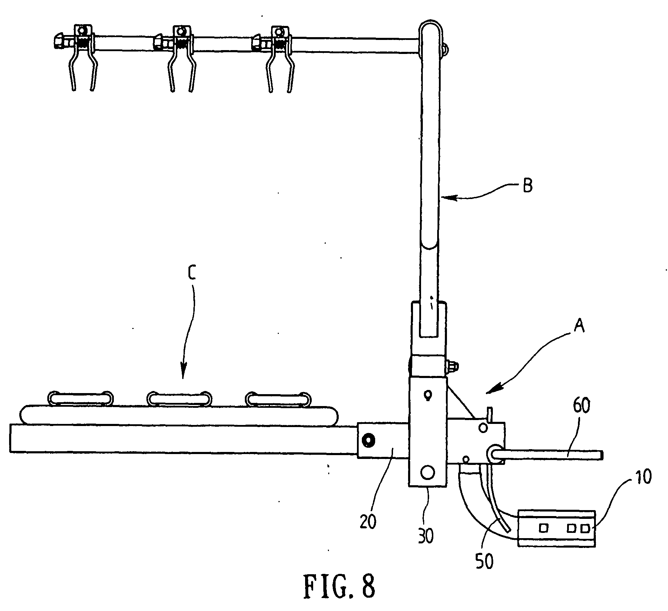

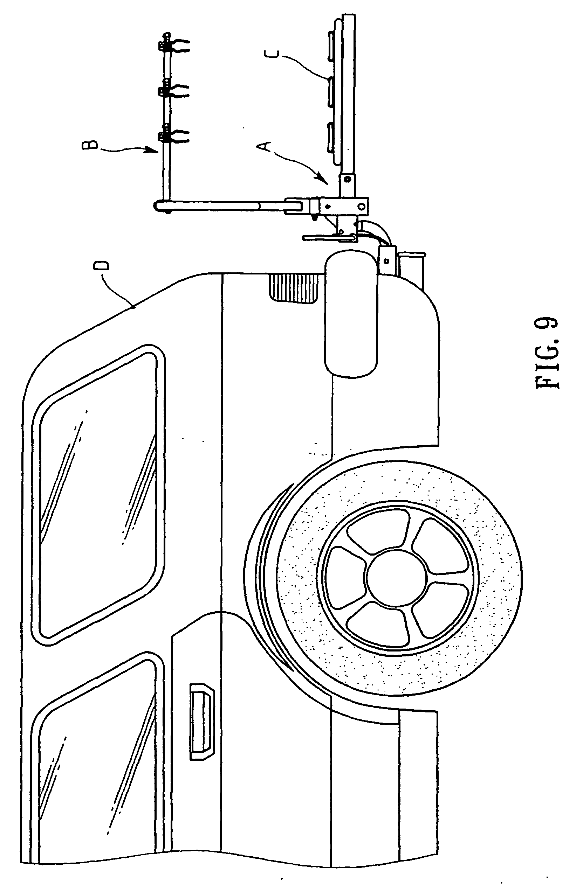

Referring to Figs. 1, 2, 3 and 9, the clamp device "A" of the present invention comprises a base 20 which is composed of a vertical portion 21 and a horizontal portion 22. The vertical portion 21 is connected to the bicycle rack "B" and the horizontal portion 22 can be connected to a support plate "C" as shown in Fig. 8.

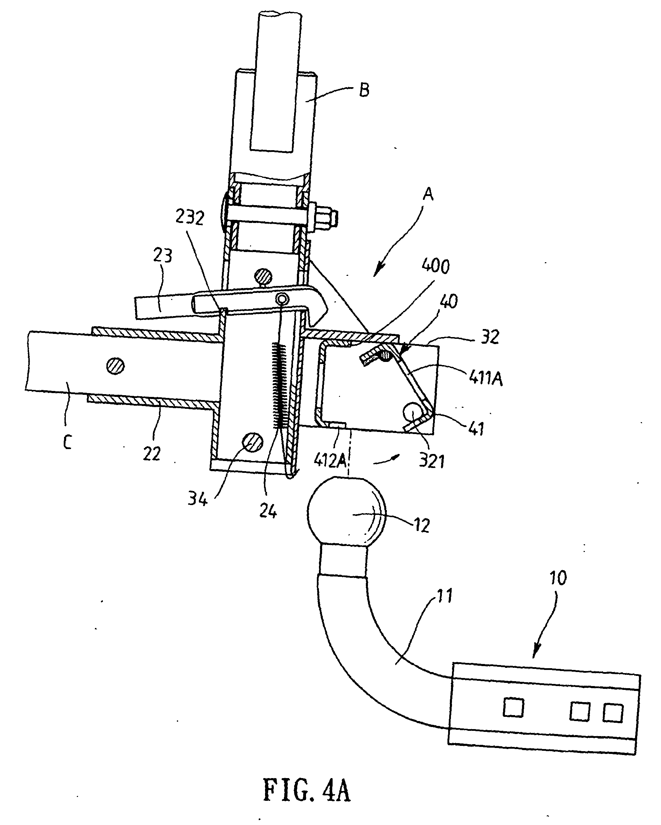

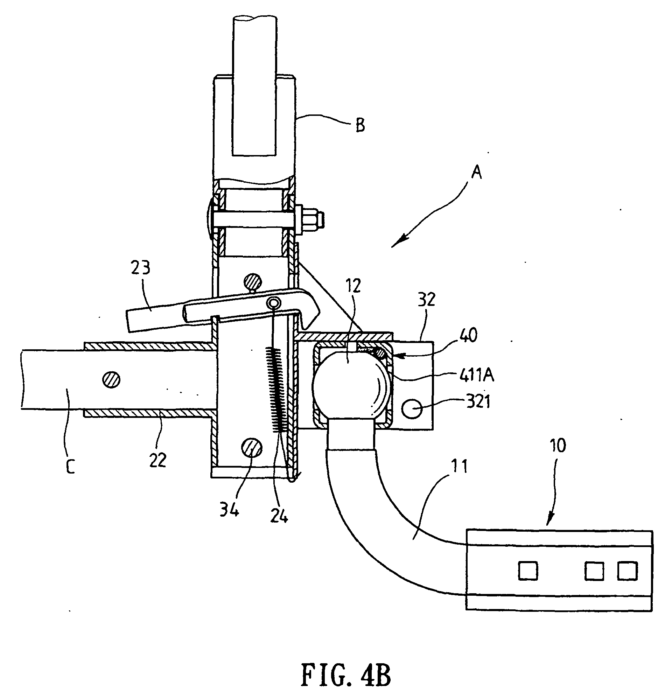

A connection member 30 includes two side walls 31 extending therefrom and the vertical portion 21 of the base 20 is received between the two side walls 31. Pins 34, 35 extend through the two side walls 31 and the base 20 so as to combine the two parts. Two side plates 32 extends from a side thereof and a top plate 33 is connected between the two side plates 32. A first fixing member 400 is fixedly connected between the two side plates 32 and a second fixing member 40 is pivotably connected between the two side plates 32 so that the second fixing member 40 can be pivoted as shown in Fig. 4A. Each of the first fixing member 400 and the second fixing member 40 is a C-shaped plate which comprises a vertical part 41 and two horizontal parts 412, 413. A semi-circular recess 412A is defined in each of the two respective horizontal parts 412 and a hole 411 is defined through the vertical part 41 of the two fixing members 40, 400. The connection sphere 12 is inserted between the two fixing members 40, 400 with the second fixing member 40 pivoted away from the first fixing member 400, and the pivoting the second fixing member 40 back to clamp the connection sphere 12 as shown in Fig. 4B.

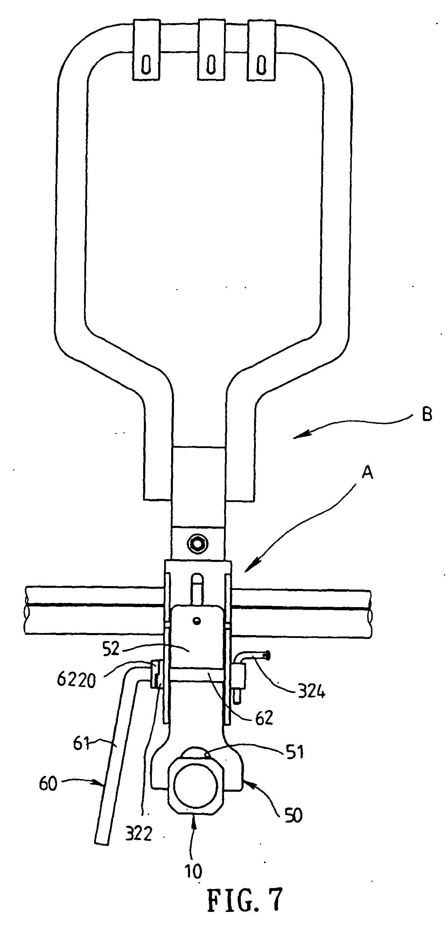

A pressing bar 60 has a handle 61 and a shank 62 which is connected to the handle 61 at an angle and has the plane surface 621. A flange 6220 extends radially outward from the shank 62 and a first engaging piece 622 extending a side of the flange 6220. A plane surface 621 is defined in an outer periphery of the shank 62 and the shank 62 extends through the two side plates 32. Each of the side plates 32 has a protrusion 322/323 on an outside thereof and the protrusion 322 has a second engaging piece 322 which is engaged with the first engaging piece 622 to positioning the pressing bar 60 as shown in Fig. 7. The protrusion 323 has a first hole 323A and a distal end of the shank 62 has a second hole 623. A pin 324 extends through the first hole 323A and the second hole 623.

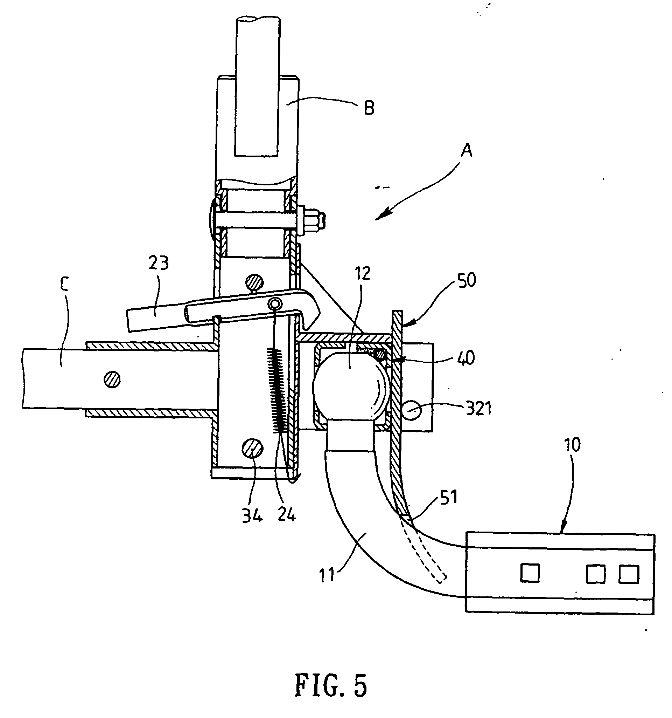

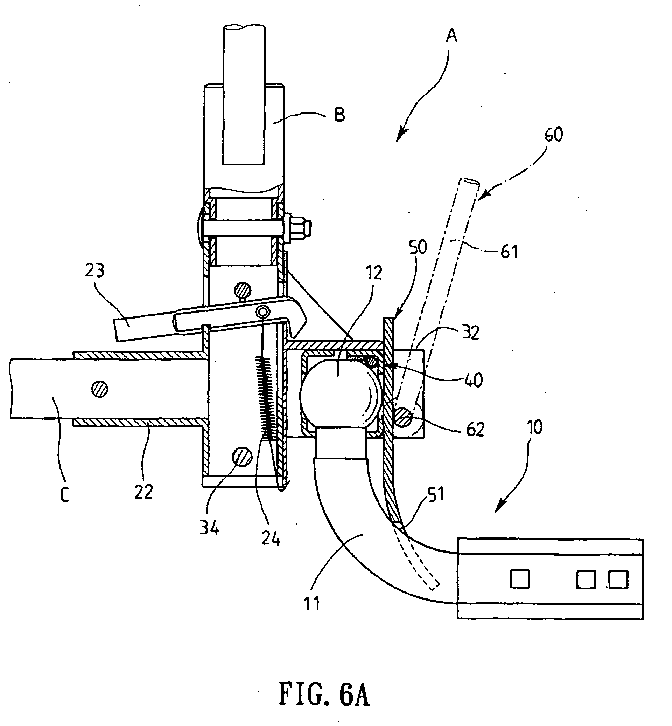

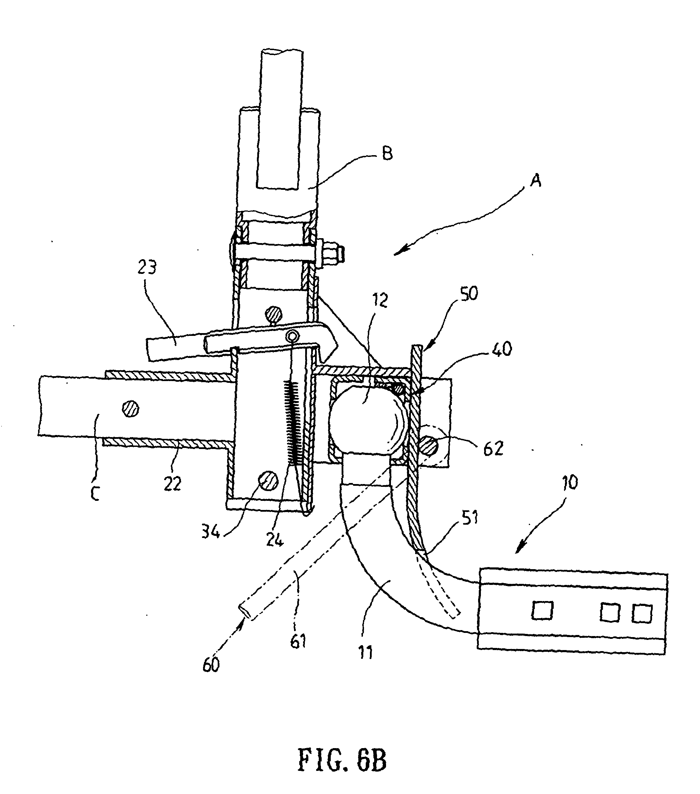

Further referring to Figs. 5, 6A and 6B, a pressing plate 50 has an insertion 52 on a top section thereof and the insertion 52 is inserted between the pressing bar 60 and the second fixing member 40. A lower section of the pressing plate 50 extends from the insertion 52 at an angle relative to a plane where the insertion 52 is located. A first notch 51 is defined in a lower edge of the lower section of the pressing plate 50 and a periphery defining the first notch 51 presses on a bar 11 extending from the connection sphere 12. The bar 11 is connected to a connection piece 10 which is fixed to a rear end of a vehicle. The plane surface 621 of the pressing bar 60 presses on an outside of the insertion 52 of the pressing plate 50 so as to push the second fixing member 40 to firmly clamp the connection sphere 12. A pad 413A may be connected to an underside of the horizontal part 413 so as to secure the connection sphere 12.

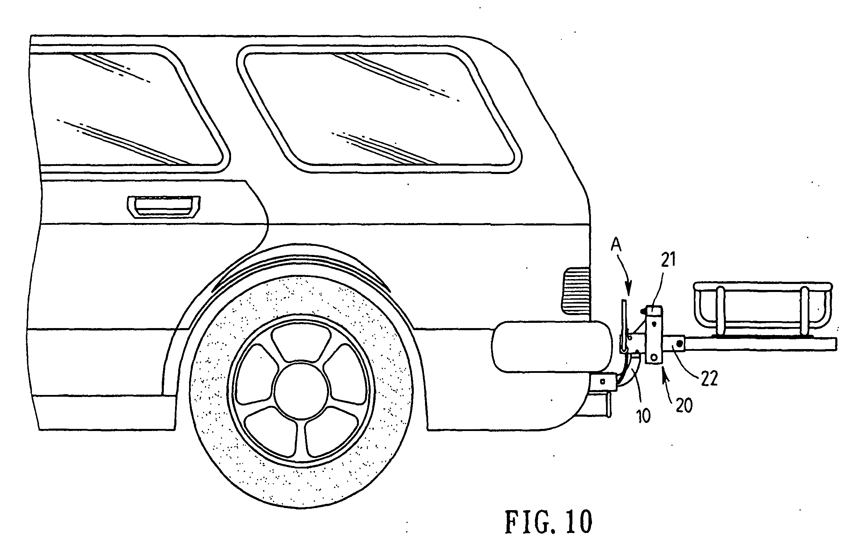

The vertical portion 21 of the base 20 has two slots 212 respectively defined through two opposite walls thereof and the connection member 30 has a hole 300 defined therethrough. A combination member 23 extends through the two slots 212 and the hole 300 in the connection member 30. The combination member 23 has a hook end 231 which is hooked at a periphery of the hole 300 of the connection member 30 and a concavity 232 is defined in an outer periphery of the combination member 23 so as to engage with a periphery of the slot 212 of one of the two opposite walls of the vertical portion 21. A spring 24 has a first end fixed to the combination member 23 and a second end of the spring 24 is hooked at a lower end of the connection member 30. When the back hood "D" of the vehicle is to be opened, the pin 35 is pulled out and the combination member 23 is pushed at one end so as to disengage the hook end 231 from the hole 300. By this way, the base 20 can be pivoted about the pin 34 such that the back hood "D" can be conveniently opened. When the base 20 is returned back to its original position, the combination member 23 hooks the connection member 30 and combines the base 20 to the connection member 30, the user now may insert the pin 35 to position the base 20 to the connection member 30. Fig. 10 shows that only the support plate is connected to the base 20 without using the bicycle rack assembly "B".

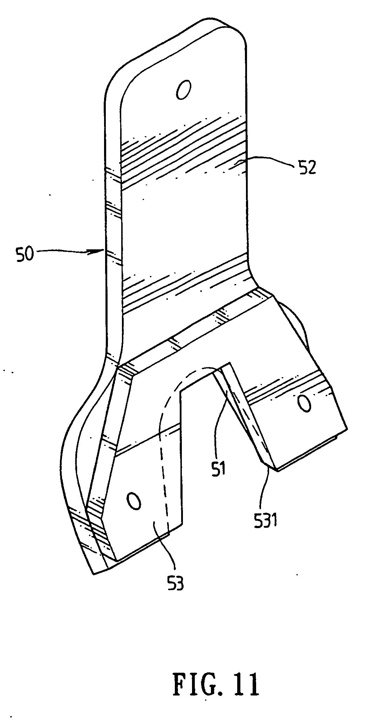

Fig. 11 shows that an auxiliary plate 53 is connected to the lower section of the pressing plate 50 and has a second notch 531 which communicates with the first notch 51 and is smaller than the first notch 51. The auxiliary plate 53 is used to fit the bar 11 in different sizes.

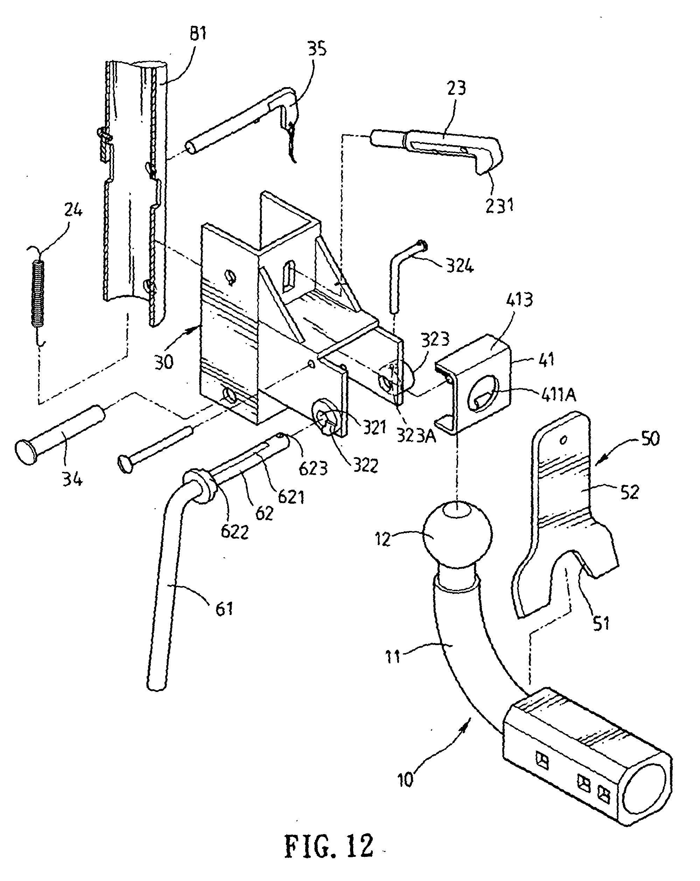

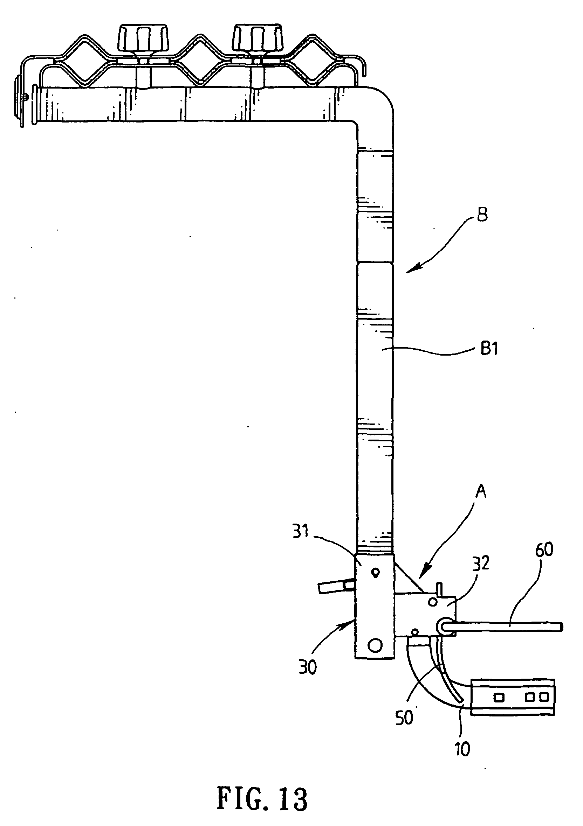

Figs. 12 and 13 show that the base 20 is omitted and the bicycle rack assembly "B" is connected with an extension tube "B1" and the pin 35 extends through the connection member 30 and a hole defined through the extension tube "B".

## Claims

1. A clamp device for connecting to a connection sphere (12) of a trailer coupling, comprising:
a connection member (30) having two side plates (32) extending from a side thereof, the connection member (30) adapted to be connected to a bicycle rack assembly (B) on a top thereof, a first fixing member (400) fixedly connected between the two side plates (32) and a second fixing member (40) which is pivotably connected between the two side plates (32), each of the first fixing member (400) and the second fixing member (40) having a semi-circular recess so as to be adapted to receive the connection sphere (12) between the first fixing member (400) and the second fixing member (40), a pressing bar (60) having a plane surface (621) defined in an outer periphery thereof, **characterized in that** the pressing bar (60) is extending through the two side plates (32), and
a pressing plate (50) is having a tongue (52) on a top section thereof and the tongue (52) is inserted between the pressing bar (60) and the second fixing member (40), a lower section of the pressing plate (50) is extending from the tongue (52) at an angle inclined to the tongue (52), a first notch (51) is defined in a lower edge of the lower section of the pressing plate (50), the first notch (51) defining a peripheral surface of the pressing plate (50) that is adapted to press on a bar (11) extending from the connection sphere (12), the plane surface (621) of the pressing bar (60) pressing on an outside of the tongue (52) of the pressing plate (50).

2. The clamp device as claimed in claim 1, wherein the pressing bar (60) includes a handle (61) and a shank (62) which is connected to the handle (61) at an angle and that comprises the plane surface (621), a flange (6220) extending radially outward from the shank (62) and a first engaging piece (622) extending from a side of the flange (6220), each of the side plates (32) having a protrusion (322, 323) on an outside thereof and one of the protrusions (322) has a second engaging piece (322) which is engaged with the first engaging piece (622), the other protrusion (323) having a first hole (323A) and a distal end of the shank (62) has a second hole (623), a pin (324) extending through the first hole (323A) and the second hole (623).

3. The clamp device as claimed in claim 1 wherein the connection member (30) includes two side walls (31) extending therefrom and a base (20) is received between the two side walls (31), pin (34) extending through the two side walls (31) and the base (20), the base (20) including a vertical portion (21) and a horizontal portion (22), the vertical portion (21) adapted to be connected to the bicycle rack (B) and the horizontal portion connected to a support plate (C).

4. The clamp device as claimed in claim 3 wherein the vertical portion (21) of the base (20) has two slots (212) respectively defined through two opposite walls thereof and the connection member (30) has a hole (300) defined therethrough, a combination member (23) extending through the two slots (212) and the hole (300) in the connection member (30), the combination member (23) having a hook end (231) which is hooked at a periphery of the hole (300) of the connection member (30), a concavity (232) defined in an outer periphery of the combination member (23) so as to engage with a periphery of the slot (212) of one of the two opposite walls of the vertical portion (21), a spring (24) having a first end fixed to the combination member (23) and a second end of the spring hooked at a lower end of the connection member (30).

5. The clamp device as claimed in claim 1 further comprising an auxiliary plate (53) connected to the lower section of the pressing plate (50) and having a second notch (531) which communicates with the first notch (51) and is smaller than the first notch (51).

## Patentansprüche

1. Spannvorrichtung zum Verbinden mit einer Kuppelzone (12) einer Anhängerkupplung, die Folgendes umfasst:
ein Verbindungselement (30) mit zwei seitlich davon abstehenden Seitenplatten (32), wobei das Verbindungselement (30) dazu ausgelegt ist, an seiner Oberseite mit einem Fahrradträger (B) verbunden zu werden, einem ersten, zwischen den beiden Seitenplatten (32) fest eingebundenen Befestigungsglied (400) und einem zweiten Befestigungsglied (40), das zwischen den beiden Seitenplatten (32) schwenkbar eingefügt ist und wobei jedes der beiden ersten Befestigungsglieder (400) und der zweiten Befestigungsglieder (40) eine halbkreisförmige Vertiefung aufweist, die dazu dient, die Kuppelzone (12) zwischen dem ersten Befestigungsglied (400) und dem zweiten Befestigungsglied (40) aufzunehmen, einer Druckstange (60) mit einer an ihrem Umfang angeordneten ebenen Fläche (621),
**dadurch gekennzeichnet, dass** die Druckstange (60) sich durch die beiden Seitenplatten (32) erstreckt und eine Druckplatte (50) in ihrem oberen Bereich eine Zunge (52) besitzt und die Zunge zwischen der Druckstange (60) und dem zweiten Befestigungsglied (40) eingesetzt ist, dass sich ein unterer Bereich der Druckplatte (50) von der Zunge (52) unter einem zu der Zunge (52) geneigten Winkel erstreckt und ein erster Ausschnitt (51) an der unteren Kante des unteren Bereichs der Druckplatte (50) ausgebildet ist und dieser erste Ausschnitt (51) eine periphere Fläche der Druckplatte (50) festlegt, die ausgelegt ist, um auf eine von der Kuppelzone (12) ausgehende Stange (11) zu drücken, wobei die ebene Fläche (621) der Druckstange (60) auf die Außenseite der Zunge (52) der Druckplatte (50) drückt.

2. Spannvorrichtung nach Anspruch 1,
wobei die Druckstange (60) einen Handgriff (61) und einen Schaft (62) mit einschließt, der winklig mit dem Handgriff (61) verbunden ist und die Planfläche (621) aufweist, ein Flansch (6220) sich radial von dem Schaft (62) nach außen erstreckt und ein erstes Rastglied (622) sich auf einer Seite des Flansches (6220) erhebt, jede der Seitenplatten (32) an ihrer Außenseite einen Vorsprung (322, 323) aufweist und einer der Vorsprünge (322) eine zweites Rastglied (322) aufweist, das mit dem ersten Rastglied (622) in Eingriff ist und der andere Vorsprung (323) eine erste Bohrung (323A) sowie das äußere Ende des Schafts (62) eine zweite Bohrung (623) aufweist und sich ein Bolzen (324) durch die erste Bohrung (323A) und die zweite Bohrung (623) erstreckt.

3. Spannvorrichtung nach Anspruch 1,
wobei das Verbindungselement (30) zwei Seitenwände (31) mit einschließt, die sich daran anschließen und ein Sockel (20) zwischen den beiden Seitenwänden (31) aufgenommen wird, und sich ein Stift (34) durch die beiden Seitenwände (31) und den Sockel (20) erstreckt, wobei der Sockel (20) einen vertikalen Arm (21) und einen horizontalen Arm (22) umfasst und der vertikale Arm (21) dazu ausgelegt ist, mit dem Fahrradträger (B) verbunden zu werden und der horizontale Arm an eine Stützplatte (C) angeschlossen zu werden.

4. Spannvorrichtung nach Anspruch 3,
wobei der vertikale Arm (21) des Sockels (20) zwei Schlitze (212) aufweist, die in seinen zwei gegenüberliegenden Wandungen ausgebildet sind und das Verbindungselement (30) eine durchgehende Bohrung (300) aufweist und ein Koppelelement (23) die beiden Schlitze (212) und die Bohrung (300) im Verbindungselement (30) durchdringt, wobei das Koppelelement (23) ein hakenartiges Ende (271) aufweist, das am Rand der Bohrung (300) des Verbindungselements (30) einhakt und eine Vertiefung (232) am Umfang des Koppelelements (23) ausgelegt ist, um mit dem Umfang des Schlitzes (212) einer der beiden gegenüberliegenden Wandungen des vertikalen Arms (21) in Eingriff zu kommen, sowie eine Feder (24), deren erstes Ende an dem Koppelement (23) befestigt ist und deren zweites Ende am unteren Ende des Verbindungselements (30) eingehakt ist.

5. Spannvorrichtung nach Anspruch 1,
die weiterhin eine zusätzliche Platte (53) aufweist, die am unteren Ende der Druckplatte (50) befestigt ist und einen zweiten Ausschnitt (531) besitzt, der mit dem ersten Ausschnitt (51) zusammenhängt und kleiner als der erste Ausschnitt (51) ist.

## Revendications

1. Dispositif de blocage destiné à un raccordement à une sphère de raccordement (12) d'un couplage de remorque comprenant :
un élément de raccordement (30) comportant deux plaques latérales (32) s'étendant à partir de chacun ses côtés, l'élément de raccordement (30) étant adapté pour être connecté à un ensemble de support à bicyclettes (B) sur sa partie supérieure, un premier élément de fixation (400) étant raccordé de façon fixe entre les deux plaques latérales (32) et un second élément de fixation (40) qui est connecté à pivotement entre les deux plaques latérales (32), chacun du premier élément de fixation(400) et du second élément de fixation (40) comportant un évidement semi-circulaire de façon à être adapté pour recevoir la sphère de raccordement (12) entre le premier élément de fixation (400) et le second élément de fixation (40), une barre de pression (60) présentant une surface plane (621) définie dans sa périphérie extérieure, **caractérisé en ce que** la barre de pression (60) s'étend à travers les deux plaques latérales (32), et
**en ce qu'**une plaque de pression (50) comporte une languette (52) sur sa section supérieure et **en ce que** la languette est insérée entre la barre de pression (60) et le second élément de fixation (40), une section inférieure de la plaque de pression (50) s'étend à partir de la languette (52) suivant un angle par rapport à la languette (52), une première encoche (51) est définie dans un bord inférieur de la section inférieure de la plaque de pression (50), la première encoche (51) définissant une surface périphérique de la plaque de pression (50) qui est adaptée pour s'appuyer sur une barre (11) s'étendant à partir de la sphère de raccordement (12), la surface plane (621) de la barre de pression (60) s'appuyant sur une partie extérieure de la languette (52) de la plaque de pression (50).

2. Dispositif de blocage selon la revendication 1 dans lequel la barre de pression (60) comporte une poignée (61) et une tige (62) qui est connectée à la poignée (61) suivant un angle et qui comprend la surface plane (621) ; une bride (6220) s'étendant radialement vers l'extérieur à partir de la tige (62) et une première pièce d'engagement (622) s'étendant à partir d'un côté de la bride (6220), chacune des plaques latérales (32) comportant une partie en saillie (322, 323) sur sa partie extérieure et l'une des parties en saillie (322) comporte une seconde pièce d'engagement (322) qui est engagée avec la première pièce d'engagement (622), l'autre partie en saillie (323) comportant un premier trou (323A) et une extrémité distale de la tige (62) comporte un second trou (623), une broche (324) s'étendant à travers le premier trou (323A) et le second trou (623).

3. Dispositif de blocage selon la revendication 1 dans lequel l'élément de raccordement (30) comporte deux parois latérales (31) s'étendant à partir de lui et une base (20) est reçue entre les deux parois latérales (31), une broche (34) s'étendant à travers les deux parois latérales (31) et la base (20), la base (20) incluant une partie verticale (21) et une partie horizontale (22), la partie verticale (21) étant adaptée pour être raccordée au support à bicyclettes (8) et la partie horizontale étant raccordée à une plaque de support (C).

4. Dispositif de blocage selon la revendication 3 dans lequel la partie verticale (21) de la base (20) comporte deux fentes (212) définies, respectivement, à travers ses deux parois opposées et l'élément de raccordement (30) comporte un trou (300) défini à travers lui, un élément de combinaison (23) s'étendant à travers les deux fentes (212) et le trou (300) dans l'élément de raccordement (30), l'élément de combinaison (23) possédant une extrémité en forme de crochet (231) qui est crochetée au niveau d'une périphérie du trou (300) de l'élément de raccordement (30), une concavité (232) étant définie dans une périphérie extérieure de l'élément de combinaison (23) de façon à s'engager avec une périphérie de la fente (212) de l'une des deux parois opposées de la partie verticale (21), un ressort (24) comportant une première extrémité fixée à l'élément de combinaison (23) et une seconde extrémité du ressort étant accrochée à une extrémité inférieure de l'élément de raccordement (30).

5. Dispositif de blocage selon la revendication 1 comprenant, de plus, une plaque auxiliaire (53) connectée à la section inférieure de la plaque de pression (50) et comportant une seconde encoche (531) qui communique avec la première encoche (51) et est plus petite que la première encoche (51).
